# EUROPÄISCHE PATENTANMELDUNG

(11) **EP 3 706 109 A1**
(43) Veröffentlichungstag der Anmeldung: **09.09.2020**
(21) Anmeldenummer: 19465513.0
(22) Anmeldetag: 08.03.2019
(51) Int. Cl.: G09G 3/34, G06F 3/042

(54) **HINTERGRUND-BELEUCHTUNGSMATRIX FÜR EINE ANZEIGEVORRICHTUNG ZUM ANZEIGEN VON BILDERN, ANZEIGEVORRICHTUNG SOWIE FAHRZEUG**

(71) Anmelder: Continental Automotive GmbH, 30165 Hannover (DE)
(72) Erfinder: Jakoby, Oliver, 63150 Heusenstamm (DE); Kaysser, Sascha, 63477 Maintal (DE); Lahr, Torsten, 55270 Zornheim (DE); Lazarciuc, Emil, 300694 Timisoara (RO); Hohmann, Kai, 64832 Babenhausen (DE)

(57) **Zusammenfassung**

Die Erfindung betrifft eine Hintergrund-Beleuchtungsmatrix für eine Anzeigevorrichtung (30) zum Anzeigen von Bildern. An vorbestimmten Positionen der Hintergrund-Beleuchtungsmatrix sind Selbstleuchtelemente (SLE) für sichtbares Licht vorgesehen Dieses Licht wird von den davor angeordneten LCD-Zellen je nach Ansteuerung entweder mehr oder weniger durchgelassen. Die Hintergrund-Beleuchtungsmatrix weist an vorbestimmten Positionen Selbstleuchtelemente (IRE) für nicht-sichtbare Strahlung auf. Weiterhin sind jeweils pro Selbstleuchtelement (IRE) an umliegenden Positionen Detektorelemente (IRD) für nicht-sichtbare Strahlung vorgesehen. Durch diese Konstruktion kann mit der entsprechend ausgestatteten Anzeigevorrichtung (30) eine einfache Gestenerkennung zur Bedienung realisiert werden, ohne dafür eine Kamera vorsehen zu müssen.

## Beschreibung

Der Vorschlag betrifft das technische Gebiet von Anzeigevorrichtungen. In heutigen Fahrzeugen werden zunehmend größere Anzeigeeinheiten insbesondere für den Infotainmentbereich eingesetzt. Die typischerweise eingesetzten Anzeigeeinheiten sind berührungsempfindliche Anzeigeeinheiten, sogenannte Touchscreens, und verwenden Flüssigkristalle (LCD) zur Darstellung der Farbinformation für jeden Bildpunkt (Pixel). Diese leuchten selbst nicht aktiv, sondern als Lichtquelle verfügen die LCD-Anzeigeeinheiten über eine aktive Hintergrundbeleuchtung (Backlight) in Form von LED Anordnungen oder Anordnungen mit optischen Folien und Lichtleitern.

Die Konstruktion sorgt für Licht-Absorptionen im optischen Pfad der LCD-Anzeigeeinheit (Polarisator, Analysator, Farbfilter, etc.). Diese plus die LED Verlustleistung führen zu einem erheblichen Wärmeeintrag in der Anzeigeeinheit. Hinzu kommt, dass durch den rückseitigen Backlight-Aufbau (LEDs, Folien, Lichtleiter, etc.) eine gewisse Aufbaudicke des Displays bedingt ist. Aus Design-Gründen wären je nach Einbausituation gebogene Anzeigeeinheiten interessant. Dies lässt sich aber umso schlechter realisieren, je dicker die Anzeigeeinheit ist. Typischerweise ist auch noch der Kontrastumfang solcher LCD-Anzeigeeinheiten geringer, weil die Schwarzdarstellung des Displays bedingt durch das Streulicht von der Hintergrundbeleuchtung nicht ideal umsetzbar ist.

Aus der US 2015/0154905 A1 ist eine Anzeigevorrichtung bekannt, bei der die Bildpunkte aus vier Elementen bestehen, von denen drei Elemente als Selbstleuchtelemente für die Erzeugung der drei Grundfarben ausgebildet sind und das vierte Element als Lichtsensor ausgebildet ist.

Aus der WO 2008/099338 A1 ist eine LCD-Anzeigeeinheit bekannt, bei der jeder Bildpunkt aus drei lichtdurchlässigen Subpixel-Elementen in den Farben Rot (R), Grün (G) und Blau (B) besteht. Das Licht wird erzeugt von einer LED-Backlight-Panel Anordnung, bei der für eine Bildpunktgruppe über die Bildschirmfläche verteilt vier verschieden farbige Leuchtdioden (LED) in den Farben (Rot (R), Gelb (A), Grün (G), Blau (B)) positioniert sind.

Aus der WO 2015 193 434 A2 ist eine Mikro-LED-Anzeige bekannt, die unter Verwendung von Arrays von Mikro-LEDs zusammengebaut wird. Die Mikro-LEDs können auf einem nativen Substrat hergestellt und auf ein Anzeigesubstrat (z. B. Kunststoff, Metall, Glas oder andere Materialien) gedruckt werden, wodurch die Herstellung der Mikro-LEDs auf dem Anzeigesubstrat entfällt. In bestimmten Ausführungsformen ist das Anzeigesubstrat transparent und / oder flexibel. Es ist in diesem Dokument ebenfalls beschrieben, dass ein Bildpunkt aus vier Elementen zusammengesetzt sein kann, von denen drei Mikro-LED's für die RGB Farben vorgesehen sind und das vierte Element als Mikro-Sensor ausgestaltet sein kann. Dabei werden verschiedene Mikro-Sensoren aufgeführt: Bildaufnehmer, optische Sensoren, Photodioden, Infrarot-Sensoren, Gestenerkennungs-Sensoren, Temperatur-Sensoren, usw.

Gegenüber dem vorstehend beschriebenen Stand der Technik besteht die Aufgabe der Erfindung darin, eine LCD-Anzeigevorrichtung so weiterzubilden, dass sie eine Möglichkeit einer Gestenerkennung zur Bedienung bietet. Insbesondere soll es erreicht werden, eine einfache Gestenerkennung zur Bedienung eines Gerätes bei einer Anzeigeeinheit zu ermöglichen, ohne dafür eine Kamera einzusetzen, deren Bilder mit rechenaufwendigen Bildauswertungsalgorithmen in einer entsprechend leistungsfähigen Recheneinheit ausgewertet werden müssen.

Diese Aufgabe wird durch eine Hintergrund-Beleuchungsmatrix nach Anspruch 1, eine Anzeigevorrichtung zum Anzeigen von Bildern gemäß Anspruch 8 sowie ein Fahrzeug gemäß Anspruch 11 gelöst.

Die abhängigen Ansprüche beinhalten vorteilhafte Weiterbildungen und Verbesserungen der Erfindung entsprechend der nachfolgenden Beschreibung dieser Maßnahmen.

In einer allgemeinen Ausführungsform besteht die Lösung der Aufgabe in einer Hintergrund-Beleuchtungsmatrix für eine Anzeigevorrichtung zum Anzeigen von Bildern, wobei an vorbestimmten Positionen Selbstleuchtelemente für sichtbares Licht vorgesehen sind. Die Lösung ist dadurch gekennzeichnet, dass an vorbestimmten Positionen Selbstleuchtelemente für nicht-sichtbare Strahlung vorgesehen sind und jeweils pro Selbstleuchtelement an umliegenden Positionen Detektorelemente für nicht-sichtbare Strahlung vorgesehen sind. Durch die Kombination von Selbstleuchtelementen für nicht-sichtbare Strahlung und Detektorelementen für nicht-sichtbare Strahlung wird es möglich, die von dem Selbstleuchtelement für nicht-sichtbare Strahlung ausgestrahlte und durch die Hand der Bedienperson bei Vollziehung einer Geste zurückgestreute Strahlung mit den Detektorelementen für nicht-sichtbare Strahlung zu erfassen. Dies kann von einem Prozessor ausgewertet werden und in der Abfolge mehrerer Erfassungen kann die Geste so erkannt werden.

In einer vorteilhaften Variante kann pro einer vorbestimmten Bildpunktgruppe der Anzeigematrix der Anzeigevorrichtung nur an einer ausgewählten Bildpunktposition ein Selbstleuchtelement für nicht-sichtbare Strahlung vorgesehen sein. Dies hat den Vorteil, dass nur eine geringere Zahl an Selbstleuchtelementen angeordnet werden müssen. Dies vereinfacht die Konstruktion der Anzeigevorrichtung, verringert die Kosten und den Stromverbrauch, und führt auch zu geringerer Verlustleistung, die wieder in Wärme umgewandelt wird.

In dieser Beziehung ist es vorteilhaft, wenn wenigstens ein Teil der Detektorelemente als ein Detektorelement für nicht-sichtbare Infrarotstrahlung oder Radarstrahlung ausgestaltet ist. Da umliegend um das Selbstleuchtelement für nicht-sichtbare Strahlung mehrere Detektorelemente für nicht-sichtbare Strahlung vorgesehen werden, wird es möglich, die reflektierte Strahlung ortsaufgelöst zu messen. Durch die Vollziehung einer Geste werden so einige der umliegenden Detektoren mehr Intensität an reflektierter Strahlung erfassen als andere umliegende Detektoren und es kann durch Auswertung der Intensitäten in der Abfolge die Geste erkannt werden.

In einer erweiterten Variante kann ein anderer Teil der Detektorelemente als ein Detektorelement für sichtbares Licht oder für die Temperaturmessung ausgestaltet sein. Damit kann zusätzlich eine automatische Helligkeitssteuerung oder eine automatische Leistungsregelung realisiert werden.

Es ist besonders vorteilhaft, wenn das Selbstleuchtelement für nicht-sichtbare Strahlung ein Selbstleuchtelement für Infrarotstrahlung ist und das Detektorelement für nicht-sichtbare Strahlung ein Sensorelement für Infrarotstrahlung ist. InfrarotStrahlung kann sehr effizient mit Halleiter-Dioden erzeugt werden und von HalbleiterDioden oder -Transistoren über den Photoeffekt erfasst werden.

Hier ist es von Vorteil, wenn die Selbstleuchtelemente für die Infrarotstrahlung als IR-LED Selbstleuchtelemente ausgebildet sind und die Detektorelemente für Infrarotstrahlung als IR-Photodiode oder als IR-Phototransistor ausgebildet sind.

In einer weiteren Ausführungsform kann das Selbstleuchtelement für nicht-sichtbare Strahlung als eine erste Mikroantenne für Radarstrahlung ausgebildet sein und das Detektorelement für nicht-sichtbare Strahlung als eine zweite Mikroantenne für Radarstrahlung ausgebildet sein.

Für eine Anzeigevorrichtung ist es vorteilhaft, dass sie mit einer Hintergrund-Beleuchtungsmatrix entsprechend des Vorschlages ausgestattet ist, wobei die Anzeigevorrichtung als LCD-Anzeigevorrichtung, entsprechend "Liquid Crystal Display", ausgebildet ist.

In einer Weiterbildung dieses Vorschlages kann die Anzeigevorrichtung zusätzlich als berührungsempfindliche Anzeigevorrichtung ausgebildet sein, entsprechend "Touchscreen".

Eine solche Anzeigevorrichtung kann in vorteilhafter Weise als Anzeigeeinrichtung für ein Infotainmentsystem eines Fahrzeuges ausgebildet sein. Diese Anzeigevorrichtung dient auch gleichzeitig zur Bedienung des Infotainmentsystems. Die Gestensteuerung ist dafür sehr erwünscht, weil sie den Fahrer weniger vom Verkehrsgeschehen ablenkt.

Für ein Fahrzeug ist es vorteilhaft, dass das Fahrzeug mit einer der hier vorgeschlagenen Anzeigevorrichtungen ausgestattet ist.

Ausführungsbeispiele der Erfindung sind in den Zeichnungen dargestellt und werden nachfolgend anhand der Figuren näher erläutert.

Figurenübersicht:
- Fig. 1: zeigt ein typisches Cockpit eines Fahrzeuges;
- Fig. 2: zeigt ein Blockschaltbild eines Infotainmentsystems eines modernen Fahrzeuges;
- Fig. 3: zeigt den Aufbau einer Anzeigevorrichtung für ein Infotainmentsystem eines Fahrzeuges.

### Figurenbeschreibung

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

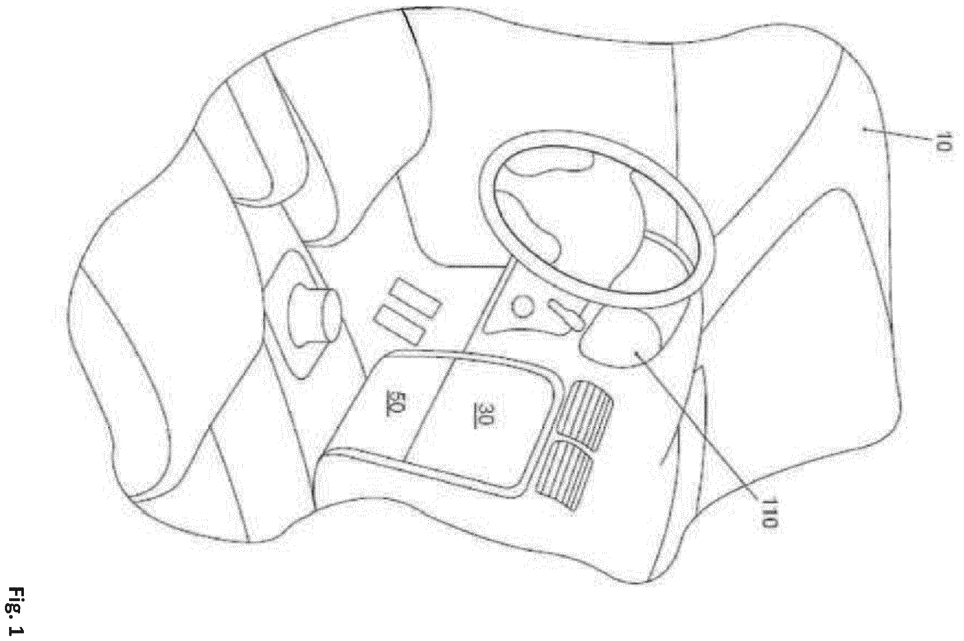

Die Fig. 1 zeigt ein Cockpit eines Fahrzeuges. Mit der Bezugsziffer 10 ist ein Fahrzeug bezeichnet. Dargestellt ist ein Personenkraftwagen. Es kann sich um einen beliebigen Fahrzeugtyp handeln. Beispiele für andere Fahrzeugtypen sind: Camping-Fahrzeuge, Busse, Motorräder, Fahrräder, Nutzfahrzeuge, insbesondere Lastkraftwagen, landwirtschaftliche Maschinen, Baumaschinen usw. Die Verwendung der Erfindung wäre generell bei Landfahrzeugen, Wasserfahrzeugen und Flugzeugen, insbesondere Hubschraubern und Lufttaxis, möglich.

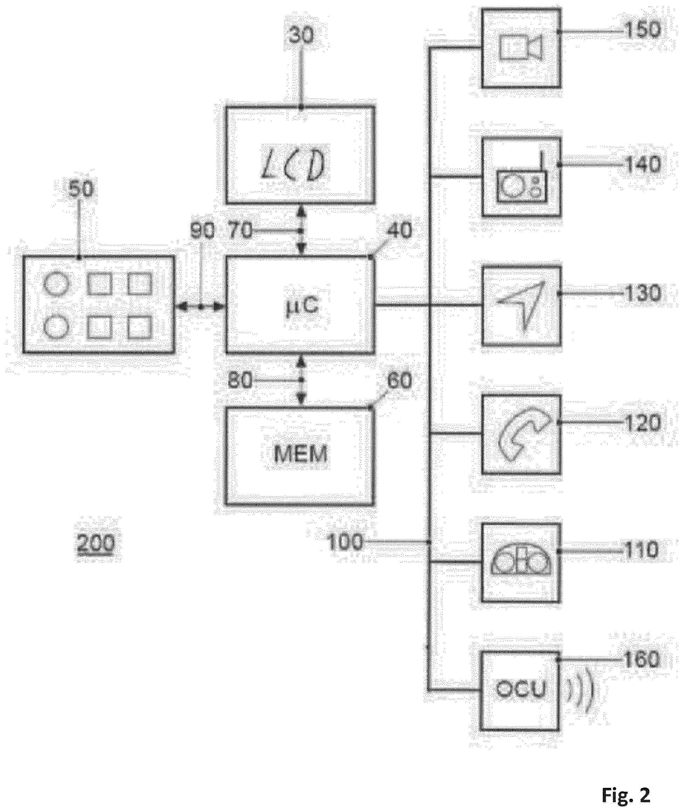

Die Fig. 2 zeigt ein typisches Blockdiagramm eines Infotainmentsystems des Fahrzeuges 10. Die Bezugszahl 30 bezeichnet einen Bildschirm. Der Bildschirm 30 dient dabei insbesondere zur Anzeige von Funktionen des Fahrzeugs 10. Beispielsweise können darüber Informationen von einem Radio, einem Navigationssystem, Informationen bei Wiedergabe von gespeicherten Musikstücken und / oder einer Klimaanlage, andere elektronische Einrichtungen oder andere Komfortfunktionen oder Applikationen des Fahrzeugs 10 angezeigt werden. Zusammengefasst wird häufig von einem "Infotainmentsystem" gesprochen. Ein Infotainmentsystem bezeichnet bei Kraftfahrzeugen, speziell Pkw, die Zusammenführung von Autoradio, Navigationssystem, Freisprecheinrichtung, Fahrassistenzsystemen und weiterer Funktionen in einer zentralen Bedieneinheit. Der Begriff Infotainment ist ein Kofferwort, zusammengesetzt aus den Worten Information und Entertainment (Unterhaltung). Die Anzeigeeinheit 30 kann insbesondere von einem Fahrer des Fahrzeugs 10, aber auch von einem Beifahrer des Fahrzeugs 10 gut eingesehen werden. Unterhalb des Anzeigegerätes 30 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

Die Anzeigeeinheit 30 ist als LCD-Anzeigeeinheit gestaltet. Dabei steht LCD für "liquid crystal display". Eine Besonderheit besteht darin, dass mit der Anzeigeeinheit 30 durch ihre besondere Gestaltung eine einfache Gestenerkennung, die mit der Hand bzw. den Fingern der Hand vollzogen werden, möglich ist. Damit können auch Wischgesten, Auswahlgesten usw. erkannt werden. In einer anderen Variante kann die Anzeigeeinheit auch noch zusätzlich als berührungsempfindliche LCD-Anzeigeeinheit ("Touchscreen") ausgelegt sein. Die Bedienung durch Gestensteuerung ist insbesondere für die Bedienung während der Fahrt von Vorteil, weil sie mit weniger Ablenkungspotential für den Fahrer einhergeht.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Anzeigeeinheit 30 von der Recheneinrichtung 40. Über die Datenleitung 70 werden auch Erfassungsdaten der durch Gestensteuerung eingegebenen Befehle von dem Anzeigeeinheit 30 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und / oder Symbolverzeichnis hinterlegt mit den Texten, Piktogrammen und/oder Symbolen für mögliche Einblendungen von Zusatzinformationen insbesondere der Anzeige einer Navigationsroute und entsprechender Abbiegehinweise, Verkehrsschilder etc.

Die weiteren Teile des Infotainmentsystems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 oder 30 Vollbilder/s auf, was bei dem Interlace-Aufnahmemodus 50 oder 60 Halbbildern/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit OBU bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation oder für die Fahrzeug-zu-Infrastruktur-Kommunikation etc.

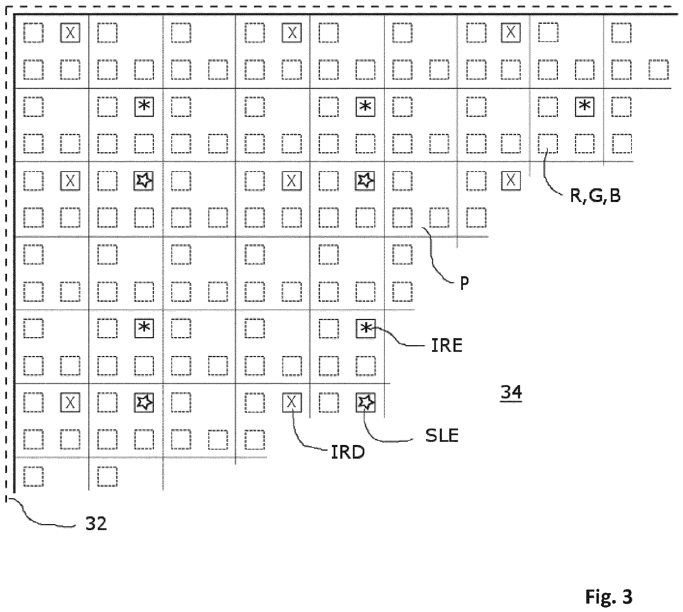

Fig. 3 zeigt jetzt den prinzipiellen Aufbau der Hintergrund-Beleuchtungsmatrix der Anzeigeeinheit 34. Die eigentliche Anzeigematrix 32, wird vor der Hintergrund-Beleuchtungsmatrix 34 angeordnet, was nur schematisch angedeutet ist. Dies ist daran erkennbar, dass die eigentlichen Subpixel-Elemente R,G,B nur gestrichelt dargestellt sind. Wie üblich beteht die Anzeigematrix 32 aus Bildpunkten P, die einzeln angesteuert werden können. Es ist nur die Matrixstruktur gezeigt, nicht aber die Zuleitungen und Treiber-Bausteine für die Ansteuerung der einzelenen Bildpunkte. Jeder Bildpunkt besteht aus drei Subpixel-Elementen R,G,B die im dargestellten Fall quadratisch angeordnet sind, wobei nur drei Elemente der quadratischen Anordnung ausgebildet sind. Es besteht aber die Möglichkeit, dass noch ein viertes Subpixel-Element einer anderen Farbe in der quadratischen Anordnung vorgesehen wird. Die Anordnung der Subpixel-Elemente kann auch linear statt quadratisch sein. Dies ist bei der üblichen Konstruktion von LCD-Anzeigeeinheiten der Fall.

Die Hintergrund-Beleuchtungsmatrix 34 weist an bestimmten Positionen Selbstleuchtelemente SLE auf. Typischerweise werden dafür Leuchtdioden eingesetzt. Es können Leuchtdioden verwendet werden, die weisses Licht abstrahlen. Alternativ kann eine Anordnung von drei oder mehr Leuchtdioden bestimmter Grundfarben pro Selbstleuchtelement SLE eingesetzt werden, um in der Kombination weisses Licht zu erzeugen. Die Positionierung der Selbstleuchtelemente SLE erfolgt in einem bestimmten Raster. Je nach Anforderung können mehr oder weniger Selbstleuchtelemente SLE eingesetzt werden. Zusätzlich sind jeweils oberhalb der Selbstleuchtelemente SLE Selbstleuchtelemente IRE für nicht-sichtbare Strahlung angeordnet. Umliegend um das jeweilige Selbstleuchtelement IRD werden an bestimmten Positionen mit dem Bezugszeichen IRD bezeichnete Detektorelemente in der Hintergrund-Beleuchtungsmatrix 34 positioniert. Diese Detektorelemente IRD entsprechen jeweils einem Detektor für die nicht-sichtbare Strahlung. In einer Variante handelt es ich dabei um ein Selbstleuchtelement IRE für Infrarotstrahlung und einen Detektor IRD für Infrarotstrahlung. Es kann dafür eine IR-Photodiode oder ein IR-Phototransistor als Detektor eingesetzt werden. Solche Photodioden oder -Transistoren bestehen ebenfalls aus Halbleitermaterialien und können gut miniaturisiert werden.

Im dargestellten Beispiel umgeben immer vier Detektorelemente IRD ein in der Mitte dieser Gruppe angeordnetes Selbstleuchtelement IRE. Auch diese IR-Emitter E können gut miniaturisiert werden, weil sie ebenfalls aus Halbleitermaterialien hergestellt werden können. Es sind entsprechende IR-LED's zu diesem Zweck verfügbar. Auch diese können gut miniaturisiert werden. Je nach gewünschter Genauigkeit der Gestenerkennung, kann die Anzahl der IR-Emitter IRE variieren. Zum Beispiel kann die Gruppe der Bildpunkte P für die ein IR-Emitter IRE vorgesehen wird aus wesentlich mehr Bildpunkten bestehen.

Mit dieser Konstruktion der Hintergrund-Beleuchtungsmatrix 34 kann eine einfache Gestenerkennung für die Bedienung des Fahrzeug-Infotainmentsystems realisiert werden. Das beruht darauf, dass die Infrarotstrahlung der Selbstleuchtelemente IRE auch bei Dunkeltastung der LCD-Zelle durchgelassen wird. So gelangt die Strahlung vor den Bildschirm und kann von der die Geste vollziehenden Hand reflektiert werden. Dazu wird wie folgt vorgegangen: Die IR-Emitter IRE werden parallel gepulst angesteuert und emittieren IR-Strahlung. Die Periodendauer für die gepulste Strahlung kann im einfachsten Fall fest vorgegeben sein. Dies kann sogar im einfachsten Fall mit der Bildwiederholrate von 50, 60, 75, 100 oder 120 Hz übereinstimmen. Für eine größere Zeitauflösung kann eine höhere Pulsrate vorgesehen werden. Im gleichen Pulsraster werden die Signale von den IR-Detektoren IRD erfasst. Eine Recheneinheit in der Anzeigeeinheit 30 wird die erfassten Signale abspeichern und in einem Puffer-speicher ablegen. Von dort können die erfassten Messwerte zu der Recheneinheit 40 übertragen werden, in der die Auswertung der Daten durchgeführt wird. Das Messprinzip besteht darin, dass die von den IR-Emittern IRE abgestrahlten IR-Signale bei Vollziehung einer Handgeste vor der Anzeigeeinheit 30 von der Hand zurückreflektiert werden. Das zurückgestreute IR-Licht wird von den IR-Detektoren IRD aufgenommen. Dabei wird an der Stelle, wo sich die Hand befindet, eine größere Intensität von IR-Licht von den umliegenden IR-Detektoren IRD gemessen als von den IR-Detektoren IRD, die in weiterer Entfernung von der Hand positioniert sind. In der Abfolge mehrerer aufeinander folgender Messungen können mit den entsprechenden Algorithmen Wischgesten und andere Gesten erkannt werden. Durch Erfassung von Fingerzeigen können ebenfalls weitere Gesten erkannt werden.

Statt der IR-Emitter E und IR-Detektoren D können in einer anderen Variante Emitter und Detektoren für Radarstrahlung in der Hintergrund-Beleuchtungsmatrix 34 eingebaut werden. Diese können in Form einer Anordnung von Mikro-Antennen direkt auf der Hintergrund-Beleuchtungsmatrix platziert werden. Speziell für Radarstrahlung im hohen Frequenzbereich von 50 - 300 GHz können Antennen im Mikrometerbereich eingesetzt werden. Die Anzeigematrix kann ebenfalls für Infrarotstrahlung durchlässig gestaltet werden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

In anderen Ausführungsformen können an einem Teil der Positionen bei der Hintergrund-Beleuchtungsmatrix andere Halbleiterbauelemente anstelle der IR-Detektoren IRD auf angebracht werden. Dies sind zum Beispiel:
- Temperaturdetektoren
- Kondensatoren
- Lichtdetektoren.

## Patentansprüche

1. Hintergrund-Beleuchtungsmatrix für eine Anzeigevorrichtung (30) zum Anzeigen von Bildern, wobei an vorbestimmten Positionen Selbstleuchtelemente (SLE) für sichtbares Licht vorgesehen sind, **dadurch gekennzeichnet, dass** an vorbestimmten Positionen Selbstleuchtelemente (IRE) für nicht-sichtbare Strahlung vorgesehen sind und jeweils pro Selbstleuchtelement (IRE) an umliegenden Positionen Detektorelemente (IRD) für nicht-sichtbare Strahlung vorgesehen sind.

2. Hintergrund-Beleuchtungsmatrix nach Anspruch 1, wobei pro einer vorbestimmten Bildpunktgruppe nur an einer ausgewählten Position ein Selbstleuchtelement (IRE) für nicht-sichtbare Strahlung vorgesehen ist.

3. Hintergrund-Beleuchtungsmatrix nach Anspruch 1 oder 2, wobei wenigstens ein Teil der Detektorelemente (IRD) als ein Detektorelement für nicht-sichtbare Infrarotstrahlung oder für Radarstrahlung ausgestaltet ist.

4. Hintergrund-Beleuchtungsmatrix nach Anspruch 3, wobei der wenigstens eine andere Teil der Detektorelemente (IRD) als ein Detektorelement für sichtbares Licht oder als ein Temperaturdetektor für die Temperaturmessung ausgestaltet ist.

5. Hintergrund-Beleuchtungsmatrix nach einem der vorhergehenden Ansprüche, wobei das Selbstleuchtelement (IRE) für nicht-sichtbare Strahlung ein Selbstleuchtelement für Infrarotstrahlung ist und das Detektorelement (IRD) für nicht-sichtbare Strahlung ein Detektorelement für Infrarotstrahlung ist.

6. Hintergrund-Beleuchtungsmatrix nach Anspruch 5, wobei ebenfalls die Selbstleuchtelemente (IRE) für die Infrarotstrahlung als IR-LED Selbstleuchtelemente ausgebildet sind und die Detektorelemente (IRD) für Infrarotstrahlung als IR-Photodiode oder als IR-Phototransistor ausgebildet sind.

7. Hintergrund-Beleuchtungsmatrix nach einem der Ansprüche 1 bis 4, wobei das Selbstleuchtelement (IRE) für nicht-sichtbare Strahlung eine erste Mikroantenne für Radarstrahlung ist und das Detektorelement (IRD) für nicht-sichtbare Strahlung eine zweite Mikroantenne für Radarstrahlung oder dieselbe Mikroantenne für Radarstrahlung ist.

8. Anzeigevorrichtung mit einer Hintergrund-Beleuchtungsmatrix nach einem der vorhergehenden Ansprüche, wobei die Anzeigevorrichtung als LCD-Anzeigevorrichtung, entsprechend "Liquid Crystal Display" ausgebildet ist, bei der die Anzeigematrix aus Bildpunkten (P) zusammengesetzt ist, mit einer für die Anzahl der Bildpunkte (P) der anzuzeigenden Bilder ausgelegten Anzahl von LCD-Zellen (R,G,B), wobei pro Bildpunkt wenigstens drei LCD-Zellen (R,G,B) für die drei Grundfarben Rot, Grün, Blau vorgesehen sind.

9. Anzeigevorrichtung nach Anspruch 8, wobei die Anzeigevorrichtung als berührungsempfindliche Anzeigevorrichtung ausgebildet ist, entsprechend "Touchscreen".

10. Anzeigevorrichtung nach einem der vorhergehenden Ansprüche, wobei die Anzeigeeinrichtung (30) als Anzeigeeinrichtung für ein Infotainmentsystem eines Fahrzeuges (10) ausgebildet ist.

11. Fahrzeug, **dadurch gekennzeichnet, dass** das Fahrzeug (10) mit einer Anzeigeeinrichtung (30) nach einem der Ansprüche 8 bis 10 ausgestattet ist.
